# EUROPÄISCHE PATENTSCHRIFT

(11) **EP 3 325 789 B1**
(45) Veröffentlichungstag und Bekanntmachung des Hinweises auf die Patenterteilung: **17.03.2021**
(21) Anmeldenummer: 16750358.0
(22) Anmeldetag: 14.07.2016
(51) Int. Cl.: F02D 35/02

(54) **VERFAHREN ZUR DATENERFASSUNG**
METHOD FOR DATA RECORDING
PROCÉDÉ D'ENREGISTREMENT DE DONNÉES

(30) Priorität: 23.07.2015 AT 4892015
(43) Veröffentlichungstag der Anmeldung: 30.05.2018
(73) Patentinhaber: Innio Jenbacher GmbH & Co OG, 6200 Jenbach (AT)
(72) Erfinder: KOPECEK, Herbert, 6130 Schwaz (AT); KRÖLL, Markus, 6295 Ginzling (AT); FRÖHLICH, Moritz, 6233 Kramsach (AT); WEITZER, Thomas, 6020 Innsbruck (AT); ZÖGGELER, Klaus, 6370 Kitzbühel (AT)
(74) Vertreter: Torggler & Hofinger Patentanwälte
(86) Internationale Anmeldenummer: PCT/AT2016/060007
(87) Internationale Veröffentlichungsnummer: WO 2017/011846

(56) Entgegenhaltungen:
- DE-A1- 10 157 680
- DE-A1-102005 056 963
- DE-A1-102005 060 665
- US-A1- 2006 282 598

## Beschreibung

Die Erfindung betrifft ein Verfahren zur Datenerfassung von Messwerten einer Zylinderdruckmessung mit den Merkmalen des Oberbegriffs von Anspruch 1.

Aus dem Stand der Technik sind verschiedene Verfahren zur Datenerfassung und Datenverarbeitung von Messwerten motorischer Größen bekannt.

Die Übermittlung der Messwerte, beispielsweise der Ergebnisse einer Zylinderdruckmessung, erfolgt über individuelle Signalleitungen von den Sensoren zu einer zentralen Recheneinheit, etwa der Motorsteuerung. Dies ist zum Beispiel aus den Schriften CN 102003298, US 8,528,521 B2 , US 8,375,776 B2 , US 6,827,061 B2, US 6,567,709 B1, US 5,359,883 A, US 5,229,945 A, DE10 2005060665 A1 bekannt.

Ein anderer aus dem Stand der Technik bekannter Ansatz zur Verarbeitung von Zylinderdruckdaten ist eine dezentrale Auswertung. Demgemäß werden die Messwerte überhaupt nicht an einen zentralen Rechner übermittelt.

Aufgabe der Erfindung ist die Bereitstellung eines verbesserten Verfahrens zum Übermitteln von Zylinderdruckdaten an eine zentrale Recheneinheit.

Gelöst wird diese Aufgabe durch ein Verfahren mit den Merkmalen von Anspruch 1. Vorteilhafte Ausführungsformen sind in den abhängigen Ansprüchen angegeben.

Durch die Verwendung eines Kommunikationssystems zur isochronen Datenübertragung, mit dem die Zylinderdrucksensoren und die zentrale Recheneinheit über einen Datenbus verbunden sind, wobei jeder der Vielzahl von Zylinderdrucksensoren gemeinsam mit einer Datenerfassungseinheit und einer Datenkommunikationseinheit zu einem Messknoten zusammengefasst ist, wobei die Übermittelung der Zylinderdruckdaten von den Messknoten zur zentralen Recheneinheit über ein Zeitschlitzverfahren (engl.: *time-slot-based communication*) erfolgt, ist weniger Verkabelung erforderlich (im Idealfall genügt eine einzige Leitung) und ist die Kommunikationszeit gegenüber dem Stand der Technik verkürzt. Dadurch ist eine schnellere Reaktion auf Unregelmäßigkeiten im Zylinderdruckverlauf möglich.

Die Zylinderdrucksensoren sind in einzelnen Zylindern einer Brennkraftmaschine angeordnet. Es kann sich um Druckaufnehmer oder um andere Sensoren handeln, die eine für den Zylinderdruck charakteristische Größe erzeugen können. Es müssen nicht alle Zylinder mit Zylinderdrucksensoren ausgestattet sein, vorzugsweise sind jedoch alle Zylinder mit Zylinderdrucksensoren ausgestattet. Es müssen nicht alle Zylinderdrucksensoren gemeinsam mit einer Datenerfassungseinheit und einer Datenkommunikationseinheit zu einem Messknoten zusammengefasst sein, vorzugsweise ist dies jedoch der Fall.

Vorzugsweise ist das Kommunikationssystem in Form eines verkabelten Netzwerkes ausgebildet.

Ein geeignetes Kommunikationssystem zur isochronen Datenübertragung (engl.: *time triggered hard real-time network*) ist beispielsweise in der DE 10 2010 027167 B4 angegeben. Die Teilnehmer im Kommunikationssystem (Messknoten, zentrale Recheneinheit) sind dazu mit Uhren ausgestattet. Eine Uhrensynchronisation der Teilnehmer im Kommunikationssystem zur Erfüllung der Echtzeitanforderungen des Kommunikationssystems kann beispielsweise nach dem IEEE 1588 oder einem anderen geeigneten Standard erfolgen. Dazu wird die Zykluszeit vorzugsweise viel kleiner (d.h. in etwa Faktor 50) als die minimal erreichbare Periode (entsprechend der maximalen Drehzahl) einer Umdrehung der Brennkraftmaschine gewählt.

Der Vorteil der Verwendung eines Zeitschlitzverfahrens liegt insbesondere darin, dass die Kommunikation (die Datenübertragung der Messwerte der Zylinderdrucksensoren) innerhalb eines definierten Zeitfensters erfolgt. Dadurch wird die Möglichkeit für eine Auswertung in Echtzeit geschaffen, um definierte Kommunikationslatenzen und damit Reaktionszeiten zu garantieren.

In der Zykluszeit des Kommunikationssystems sendet jeder Zylinderdrucksensor die von ihm in dieser Zeitspanne aufgenommenen Zylinderdruckwerte über das Kommunikationsnetzwerk an die zentrale Recheneinheit. Übermittelt werden also einzelne Kurvenstücke der Zylinderdruckkurve des jeweiligen Zylinders.

Gemäß der Erfindung werden in einem gemeinsamen Kommunikationssystem die Zylinderdruckdaten zeitbasiert verteilt und an der zentralen Recheneinheit gesammelt und dort zu den Zylinderdruckkurven zusammengesetzt.

Die Daten werden also über Messknoten aufgenommen und dort so lange gespeichert, bis die Zykluszeit abgelaufen ist und die gespeicherten Daten über ein gemeinsames zeitbasiertes Kommunikationssystem an den zentralen Rechner geschickt werden. Dazu ist nur eine Signalverbindung, z.B. ein Kabel erforderlich.

Die Auswertung der Zylinderdruckdaten erfolgt zeitlich gestaffelt und zylinderindividuell (d. h. Zeitpunkt der Auswertung kann für jeden Zylinder verschieden festgesetzt werden und auch, welchen Teil der jeweiligen Kurve man auswerten will).

Die Zuordnung der Datensegmente zum jeweiligen Kurbelwinkelbereich (Indizierung) kann durch Messung des Kurbelwinkels an einem einzigen Knoten erfolgen. Diese Messung wird an den zentralen Rechner übertragen. Mit anderen Worten kommen zu jedem Kurbelwinkel die Datensegmente aller Knoten in einer vorbestimmten Abfolge zum zentralen Rechner, man benötigt daher nur einen "Zeitstempel", um zu wissen, zu welchem Kurbelwinkel die Datensegmente gehören. Es kann auch vorgesehen sein, die Messung des Kurbelwinkels an zwei oder mehreren Knoten durchzuführen.

Die Erfindung wird anhand nachfolgender Figuren näher erläutert. Dabei zeigt:
- Fig. 1a -1c: Schema der in Messknoten zusammengefassten logischen Einheiten,
- Fig. 2: eine schematische Darstellung der Anordnung der Messknoten in einer Topologie gemäß einem bevorzugten Ausführungsbeispiel,
- Fig. 3: eine schematische Darstellung von Zylinderdruckverläufen einer Brennkraftmaschine zur Illustration der Zykluszeit,
- Fig. 4: ein Schema einer Brennkraftmaschine.

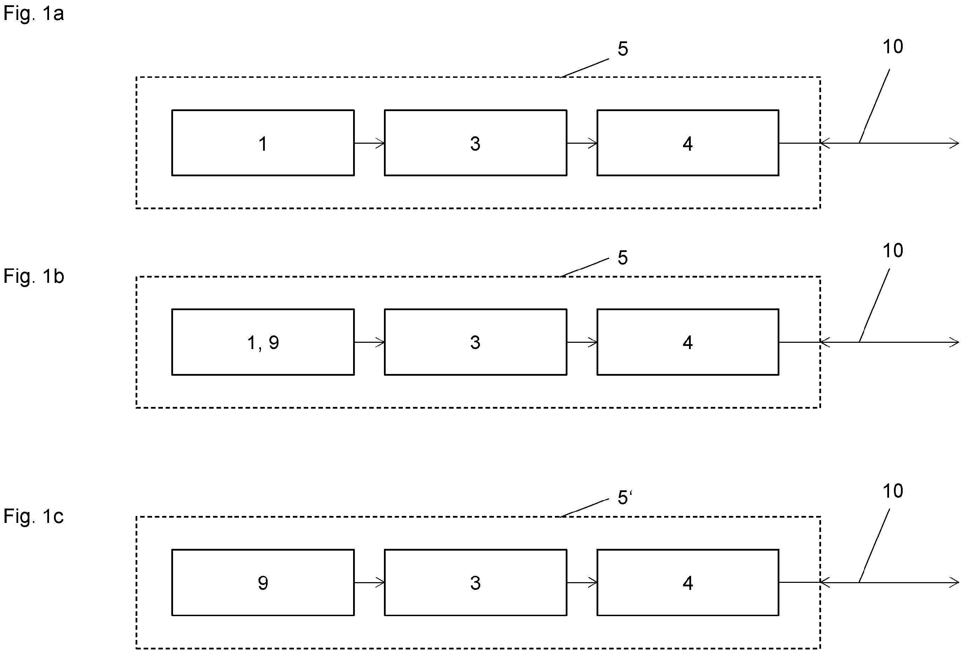

Fig. 1a zeigt in einer schematischen Darstellung, dass der Zylinderdrucksensor 1, die Datenerfassungseinheit 3 (engl. *data acquisition unit*) und die Datenkommunikationseinheit 4 (engl. *data communication unit*) funktionell zu einem Messknoten 5 zusammengefasst sind. Der Zylinderdrucksensor 1 misst Zylinderdrucksignale. Die Datenerfassungseinheit 3 digitalisiert die Zylinderdrucksignale und speichert diese. Die Datenkommunikationseinheit 4 stellt die digitalisierten gespeicherten Signale gemäß einem Zeitschlitzverfahren als Datenpakete dem Datenbus 10 zur Verfügung. Die Komponenten können baulich zusammengefasst oder auch getrennt voneinander angeordnet (nur als logische Einheiten zusammengefasst) sein.

Fig. 1b zeigt die Variante, wo zusätzlich ein Messaufnehmer 9 zur Bereitstellung einer Kurbelwinkelinformation in dem Messknoten 5 aufgenommen ist.
Die Datenerfassungseinheit 3 kann also Zylinderdrucksignale und / oder Kurbelwinkelinformation verarbeiten.

Fig. 1c zeigt ein Schema eines Kurbelwinkel-Messknotens 5', der keine Zylinderdrucksignale verarbeitet, sondern nur Kurbelwinkelinformation vom Messaufnehmer 9.

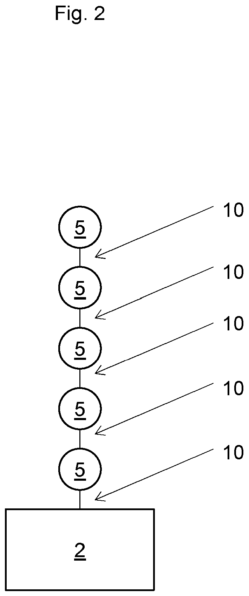

Fig. 2 zeigt die Anordnung von Messknoten 5 und einer zentralen Recheneinheit 2 in einem bevorzugten Ausführungsbeispiel. Die Topologie ist hier als sogenannte Linien-Topologie ausgeführt, d. h. die logischen bzw. physikalischen Einheiten, in diesem Fall die Messknoten 5, sind in serieller Kommunikationsverbindung zur zentralen Recheneinheit 2. Es sind natürlich auch davon abweichende Topologien des Datenbusses 10 zwischen den Messknoten 5 möglich, etwa eine Stern-Topologie oder eine Ring-Topologie. Die Datenpakete werden von den einzelnen Messknoten 5 über eine gemeinsame Leitung an die zentralen Recheneinheit 2 weitergereicht.

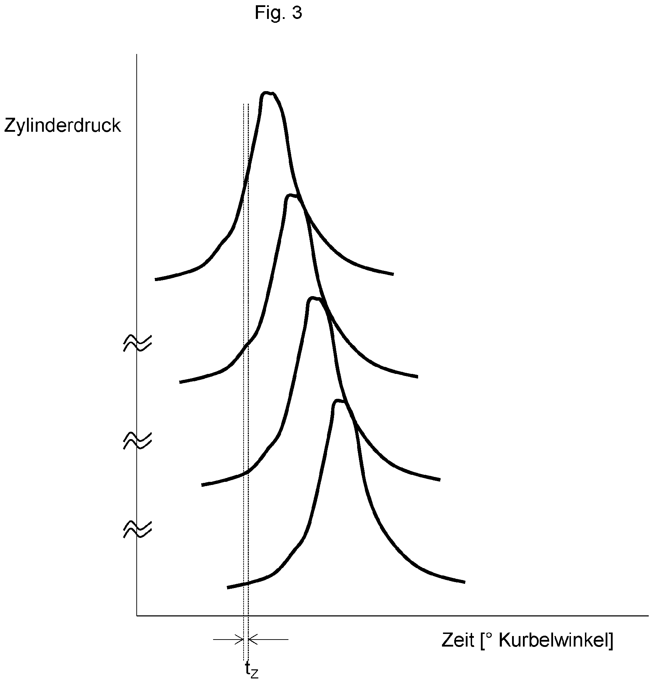

Fig. 3 zeigt den über dem Kurbelwellenwinkel aufgetragenen Zylinderdruckverlauf für vier Zylinder einer Brennkraftmaschine. Die Darstellung dient zur Illustration der Zykluszeit t_{z}, während welcher Zylinderdruckdaten über Messknoten 5 aufgenommen werden und dort solange gespeichert werden, bis die Zykluszeit t_{z} abgelaufen ist.
Sobald die Zykluszeit t_{z} abgelaufen ist, werden die Datenpakete gemäß dem Zeitschlitzverfahren dem Datenbus 10 zur Verfügung gestellt.

Ein Zeitschlitzverfahren ist ein Modulationsverfahren, bei dem Informationen eines Teilnehmers nur in kurzen Zeitabschnitten gesendet werden. Ein Zeitschlitz (engl.: *time slot*) ist also ein Zeitabschnitt vorgegebener Länge, innerhalb dessen ein Teilnehmer eines Netzwerkes Informationen zur Verfügung stellen kann. Angewandt auf die vorliegende Erfindung entspricht der *time slot* der Zykluszeit t_{z}, in welcher von den einzelnen Zylinderdrucksensoren 1 Messwerte des Zylinderdrucks übermittelt werden. Bei vorgegebener Länge der Zykluszeit t_{z} hängt es von der aktuellen Drehzahl der Brennkraftmaschine und der Auflösung des Kurbelwellenwinkelsignals ab, wieviel Datenpunkte innerhalb einer Zykluszeit t_{z} akquiriert werden.

Bevorzugt ist vorgesehen, dass die Zykluszeit t_{z} des Zeitschlitzverfahrens kleiner, vorzugsweise ca. Faktor 50 kleiner als die minimal erreichbare Periode einer Umdrehung einer Brennkraftmaschine 6 entsprechend der maximalen Drehzahl der Brennkraftmaschine 6 gewählt wird. Aus der Drehzahl einer Brennkraftmaschine 6 lässt sich einfach die Periode (Zeitdauer) einer Umdrehung berechnen. Beträgt die Drehzahl beispielsweise 1000 Umin⁻¹, dann ist die Periode 6/100 Sekunden oder 60 ms (Millisekunden) lang. Eine geeignete Zykluszeit t_{z} des Zeitschlitzverfahrens wäre demnach 60 / 50 = 1,2 ms lang.

Bei der Erfindung werden in einem gemeinsamen Kommunikationssystem die Zylinderdruckdaten zeitbasiert verteilt und an der zentralen Recheneinheit 2 gesammelt und dort zu Zylinderdruckkurven zusammengesetzt. In der Zykluszeit t_{z} (= Zeit, die benötigt wird, um alle Messknoten 5 abzufragen) des Kommunikationssystems sendet jeder Zylinderdrucksensor 1 die von ihm in dieser Zeitspanne aufgenommenen Informationen (Kurvenstück) über das Kommunikationsnetzwerk an die zentrale Recheneinheit 2.

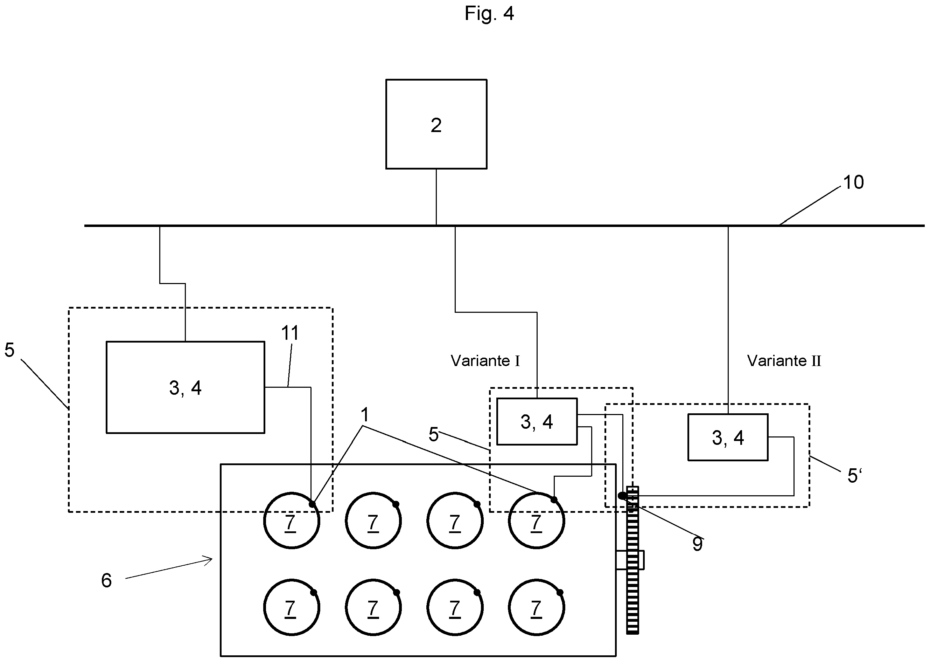

Figur 4 zeigt schematisch eine Brennkraftmaschine 6 mit einer Vielzahl von Zylindern 7. Die Zylinder 7 sind jeweils mit wenigstens einem Zylinderdrucksensor 1 ausgestattet, von welchem Zylinderdruckwerte zunächst über eine Signalleitung 11 vom Zylinderdrucksensor 1 an eine Datenerfassungseinheit 3 und eine Datenkommunikationseinheit 4 übergeben werden. Dies ist beispielhaft an einem Zylinder 7 gezeigt.

Die Zylinderdruckwerte werden über die Datenerfassungseinheit 3 und die Datenkommunikationseinheit 4 in einem Messknoten 5 gesammelt. Der Messknoten 5 ist als strichlierter Kasten dargestellt. Die einzelnen Messknoten 5 liegen an einem Datenbus 10 an. Als Beispiel ist dargestellt, dass einem Messknoten 5 genau ein Zylinderdrucksensor 1 zugeordnet ist. Es kann auch vorgesehen sein, in einem Messknoten 5 mehrere Zylinderdrucksensoren 1 zusammenzufassen. Es hat sich als besonders vorteilhaft herausgestellt, in einem Messknoten 5 zwei benachbarte Zylinderdrucksensoren 1 zusammenzufassen. Mit einer Kurbelwelle der Brennkraftmaschine 6 ist ein Zahnkranz verbunden, an welchem ein Messaufnehmer (engl. *pick-up*) 9 zur Aufnahme von Kurbelwinkelinformation (Drehzahl, Kurbelwinkel) angeordnet ist.

Es kann vorgesehen sein (dargestellt als Variante I), dass der Messaufnehmer 9 die Kurbelwinkelinformation an einen Messknoten 5 übergibt. Der Messknoten 5 umfasst in dieser Variante den Zylinderdrucksensor 1, die Datenerfassungseinheit 3, die Datenkommunikationseinheit 4 und den Messaufnehmer 9.

Gemäß der Variante II kann der Messaufnehmer 9 die Kurbelwinkelinformation an einen Kurbelwinkel-Messknoten 5' übergeben, welcher keine Zylinderdruckwerte von einem Zylinderdrucksensor 1 verarbeitet.

Liste der verwendeten Bezugszeichen:
- 1: Zylinderdrucksensor
- 2: Zentrale Recheneinheit
- 3: Datenerfassungseinheit
- 4: Datenkommunikationseinheit
- 5: Messknoten
- 5': Kurbelwinkel-Messknoten
- 6: Brennkraftmaschine
- 7: Zylinder
- 8: Zahnkranz
- 9: Messaufnehmer (pick-up)
- 10: Datenbus
- 11: Signalleitung
- t_{z}: Zykluszeit

## Patentansprüche

1. Verfahren zum Übermitteln von Zylinderdruckdaten einer Vielzahl von Zylinderdrucksensoren (1) an eine zentrale Recheneinheit (2) **gekennzeichnet durch** die Verwendung eines Kommunikationssystems zur isochronen Datenübertragung umfassend einen Datenbus (10), wobei die Vielzahl von Zylinderdrucksensoren (1) und die zentrale Recheneinheit (2) über den Datenbus (10) verbunden sind, wobei jeder der Vielzahl von Zylinderdrucksensoren (1) gemeinsam mit einer Datenerfassungseinheit (3) und einer Datenkommunikationseinheit (4) zu einem Messknoten (5) zusammengefasst ist, wobei die Übermittelung der Zylinderdruckdaten von den Messknoten (5) an die zentrale Recheneinheit (2) über ein Zeitschlitzverfahren erfolgt.

2. Verfahren nach Anspruch 1, wobei das Kommunikationssystem in Form eines verkabelten Netzwerkes ausgebildet ist.

3. Verfahren nach Anspruch 1 oder 2, wobei eine Zykluszeit (t_{z}) des Zeitschlitzverfahrens kleiner, vorzugsweise ca. Faktor 50 kleiner als die minimal erreichbare Periode entsprechend der maximalen Drehzahl einer Brennkraftmaschine 6 gewählt wird.

4. Verfahren nach wenigstens einem der vorangegangenen Ansprüche, wobei die Auswertung der Zylinderdruckdaten zeitlich gestaffelt und zylinderindividuell erfolgt.

5. Verfahren nach wenigstens einem der vorangegangenen Ansprüche, wobei die Zuordnung der Datensegmente der Zylinderdruckdaten zum jeweiligen Kurbelwinkelbereich durch Messung des Kurbelwinkels an einem einzigen Messknoten (5) erfolgt.

6. Kommunikationssystem für isochrone Datenübertragung **gekennzeichnet durch**
eine Mehrzahl von Zylindern in einer Brennkraftmaschine,
eine Mehrzahl von Zylinderdrucksensoren,
eine Datenerfassungseinheit,
eine Datenkommunikationseinheit,
einen Messknoten, der durch Kombinieren der Mehrzahl von Zylinderdrucksensoren mit der Datenerfassungseinheit und der Datenkommunikationseinheit ausgebildet ist,
einen Datenbus, und
eine zentrale Recheneinheit, die betreibbar ist zum Empfangen von Zylinderdruckdaten von dem Messknoten, wobei die zentrale Recheneinheit und die Mehrzahl von Zylinderdrucksensoren über den Datenbus verbunden sind.

7. System nach Anspruch 6, wobei das System in der Form eines verkabelten Netzwerkes ausgebildet ist.

8. System nach Anspruch 6, wobei die Zylinderdruckdaten zylinderspezifisch sind.

9. System nach Anspruch 6, wobei das System in der Form eines verkabelten Einzelleitung-Netzwerkes ausgebildet ist.

10. System nach Anspruch 6, wobei das System ein zeitgetriggertes hartes Echtzeit-Netzwerk ist.

11. System nach Anspruch 6, wobei der Messknoten und die zentrale Recheneinheit jeweils mit Taktgebern ausgestattet sind.

12. System nach Anspruch 6, ferner **gekennzeichnet durch** einen mit einer Kurbelwelle der Brennkraftmaschine verbundenen Zahnkranz mit einem an dem Zahnkranz angeordneten Messaufnehmer, der zum Aufzeichnen von Kurbelwinkelinformationen betreibbar ist.

## Claims

1. A method for transmitting the cylinder pressure data of a plurality of cylinder pressure sensors (1) to a central processing unit (2), **characterized by** the use of a communication system for isochronous data transmission comprising a data bus (10), whereby the plurality of cylinder pressure sensors (1) and the central processing unit (2) are connected via the data bus (10), whereby each of the plurality of cylinder pressure sensors (1) are combined with a data acquisition unit (3) and a data communication unit (4) to form a measurement node (5), whereby the cylinder pressure data is transmitted from the measurement node (5) to the central processing unit (2) via a time-slot method.

2. A method according to claim 1, whereby the communication system is in the form of a wired network.

3. A method according to claim 1 or 2, whereby a cycle time (t_{z}) of the time-slot method is selected to be smaller, preferably approximately 50 times smaller than the minimum achievable period corresponding to the maximum speed of an internal combustion engine 6.

4. A method according to at least one of the preceding claims, whereby the evaluation of the cylinder pressure data is staggered in time and cylinder-specific.

5. A method according to at least one of the preceding claims, whereby the assignment of the data segments of the cylinder pressure data to the respective crank angle range is performed by measuring the crank angle at a single measurement node (5).

6. A communication system for isochronous data transmission **characterized by**:
a plurality of cylinders in an internal combustion engine;
a plurality of cylinder pressure sensors;
a data acquisition unit;
a data communication unit;
a measurement node formed by combining the plurality of cylinder pressure sensors with the data acquisition unit and the data communication unit;
a data bus; and
a central processing unit operable to receive cylinder pressure data from the measurement node, with the central processing unit and the plurality of cylinder pressure sensors connected via the data bus.

7. The system of claim 6, wherein the system is in the form of a wired network.

8. The system of claim 6, wherein the cylinder pressure data is cylinder specific.

9. The system of claim 6, wherein the system is in the form of a single line wired network.

10. The system of claim 6, wherein the system is a time-triggered hard real-time network.

11. The system of claim 6, wherein the measurement node and the central processing unit are each equipped with clocks.

12. The system of claim 6, further comprising a ring gear connected to a crankshaft of the internal combustion engine, with a pick-up arranged on the ring gear operable to record crank angle information.

## Revendications

1. Procédé de transmission de données de pression de cylindre d'une pluralité de capteurs de pression de cylindre (1) à une unité de calcul centrale (2), **caractérisé par** l'utilisation d'un système de communication pour la transmission isochrone de données comprenant un bus de données (10), dans lequel la pluralité de capteurs de pression de cylindre (1) et l'unité de calcul centrale (2) sont reliées par le bus de données (10), dans lequel chacun de la pluralité de capteurs de pression de cylindre (1) est réuni en commun avec une unité de saisie de données (3) et une unité de communication de données (4) en un nœud de mesure (5), dans lequel la transmission des données de pression de cylindre des nœuds de mesure (5) à l'unité de calcul centrale (2) se fait par un procédé de créneau temporel.

2. Procédé selon la revendication 1, dans lequel le système de communication est conçu sous forme d'un réseau câblé.

3. Procédé selon la revendication 1 ou 2, dans lequel une durée de cycle (t_{z}) du procédé de créneau temporel est inférieure, de préférence inférieure d'un facteur 50 environ, à la période au minimum accessible correspondant à la vitesse de rotation maximale d'un moteur à combustion interne 6.

4. Procédé selon au moins l'une des revendications précédentes, dans lequel l'analyse des données de pression de cylindre se fait de manière échelonnée dans le temps et individuellement par cylindre.

5. Procédé selon au moins l'une des revendications précédentes, dans lequel l'affectation des segments de données des données de pression de cylindre à la zone d'angle de vilebrequin se fait en mesurant l'angle de vilebrequin à un seul nœud de mesure (5).

6. Système de communication pour une transmission isochrone de données, **caractérisé par**
une pluralité de cylindres dans un moteur à combustion interne,
une pluralité de capteurs de pression de cylindre,
une unité de saisie de données,
une unité de communication de données,
un nœud de mesure, qui est formé en combinant la pluralité de capteurs de pression de cylindre à l'unité de saisie de données et l'unité de communication de données,
un bus de données, et
une unité de calcul centrale qui est utilisable pour recevoir des données de pression de cylindre du nœud de mesure, dans lequel l'unité de calcul centrale et la pluralité de capteurs de pression de cylindre sont reliées par le bus de données.

7. Système selon la revendication 6, dans lequel le système est conçu sous forme d'un réseau câblé.

8. Système selon la revendication 6, dans lequel les données de pression de cylindre sont spécifiques au cylindre.

9. Système selon la revendication 6, dans lequel le système est conçu sous forme d'un réseau câblé à conduite individuelle.

10. Système selon la revendication 6, dans lequel le système est un réseau en temps réel dur à déclenchement temporel.

11. Système selon la revendication 6, dans lequel le nœud de mesure et l'unité de calcul centrale sont dotées à chaque fois de temporisateurs.

12. Système selon la revendication 6, **caractérisé en outre par** une couronne dentée reliée à un vilebrequin du moteur à combustion interne avec un capteur de mesure disposé sur la couronne dentée, qui est utilisable pour enregistrer les informations d'angle de vilebrequin.
